**Europäisches Patentamt**

**European Patent Office**

**Office européen des brevets**

(19)

(11) Veröffentlichungsnummer : **0 391 848 B1**

# (12) EUROPÄISCHE PATENTSCHRIFT

(45) Veröffentlichungstag der Patentschrift :
**01.09.93 Patentblatt 93/35**

(51) Int. Cl.$^5$ : **C04B 41/00,** C03C 23/00, **B44C 1/00, B41M 5/26**

(21) Anmeldenummer : **90810251.0**

(22) Anmeldetag : **28.03.90**

(54) **Laserbeschriftung von keramischen Materialien, Glasuren, keramischen Gläsern und Gläsern.**

(30) Priorität : **06.04.89 CH 1276/89**

(43) Veröffentlichungstag der Anmeldung :
**10.10.90 Patentblatt 90/41**

(45) Bekanntmachung des Hinweises auf die
Patenterteilung :
**01.09.93 Patentblatt 93/35**

(84) Benannte Vertragsstaaten :
**CH DE FR GB IT LI**

(56) Entgegenhaltungen :
**EP-A- 0 233 146**
**EP-A- 0 260 921**
**EP-A- 0 327 508**

(73) Patentinhaber : **CIBA-GEIGY AG**
**Klybeckstrasse 141**
**CH-4002 Basel (CH)**

(72) Erfinder : **Herren, Fritz, Dr.**
**Chasseralstrasse 3**
**CH-3186 Düdingen (CH)**
Erfinder : **Hofmann, Manfred, Dr.**
**Route Bel-Air 38**
**CH-1723 Marly (CH)**

**Beschreibung**

Die vorliegende Erfindung betrifft ein Verfahren zur Laserbeschriftung von keramischen Materialien, Glasuren, keramischen Gläsern und Gläsern, sowie das beschriftete Material.

Keramische Materialien, Glasuren und Gläser können nach konventionellen Markier- und Dekorierverfahren, wie Aetzen, Ritzen, Gravieren, Schleifen oder Aufbringen einer Glas- bzw. Glasurfarbe, beschriftet werden. Dabei wird die Oberfläche des beschrifteten Materials verändert, was insbesondere beim Aetzen, Gravieren und Ritzen zur Beschädigung des Materials führen kann. Beim Aufbringen einer Glas- bzw. einer Glasurfarbe ist zudem ein zweiter Einbrennvorgang erforderlich. Die so erhaltenen Markierungen sind in Bezug auf Abriebbeständigkeit nicht immer optimal.

Es ist ferner bekannt, die Beschriftung von Gläsern mit einem Laser durchzuführen, wobei die bekannten Verfahren auf dem Aufschmelzen oder Entfernen von Matrixmaterial beruhen, so dass dabei die Struktur des beschrifteten Materials an der Oberfläche auch verändert wird. So wird beispielsweise in der DDR-Patentschrift Nr. 215776 vorgeschlagen, farbige Bilder auf Glas durch Laserbestrahlung zu erzeugen. Dabei wird das Glas, das mit einer einen Farbstoff enthaltenden Deckschicht versehen ist, so bestrahlt, dass der Farbstoff in das durch das Laserlicht aufgeweichte Glas diffundiert.

Es ist weiterhin bekannt (US Patent Nr. 4769310), keramische Materialien, Glasuren, keramische Gläser und Gläser, die einen strahlungsempfindlichen Zusatzstoff enthalten, ohne Beschädigung der Oberfläche des zu markierenden Materials zu beschriften. Dabei werden als Energiestrahlung Laserlicht, dessen Wellenlänge im nahen UV- und/oder sichtbaren und/oder IR-Bereich liegt und als strahlungsempfindlicher Zusatzstoff ein anorganisches Pigment verwendet.

Schliesslich wird in der DE-OS Nr. 3539047 ein Verfahren zum Dekorieren, Markieren und Gravieren von emaillierten Gegenständen unter Anwendung von Laserstrahlen vorgeschlagen, indem dem Emailüberzug optisch und örtlich sich durch den Laserstrahl auflösende Trübungsmittel, wie Oxyde des Titans, Zinns, Cers und Antimons, beigemengt werden. Ein Nachteil dieses Verfahrens besteht darin, dass z.B. transparente emaillierte Gegenstände nicht beschriftet werden können, da sich das dem Emailüberzug beigemengte Trübungsmittel an den unbestrahlten Stellen optisch nicht verändert und daher das Gesamterscheinungsbild des Gegenstandes stark beeinflusst. Ausserdem kann das eingesetzte Trübungsmittel die mechanischen Eigenschaften des Emails beeinträchtigen.

Es wurde nun ein flexibles Verfahren gefunden, welches die Beschriftung von keramischen Materialien, insbesondere von bereits gebrannten keramischen Materialien, Glasuren, keramischen Gläsern und Gläsern, ohne Beschädigung der Oberfläche und ohne spezifische Anforderungen an das Substratmaterial ermöglicht, wonach eine transparente Metalloxidschicht für die Laserbeschriftung verwendet wird.

Gegenstand der vorliegenden Erfindung ist demnach ein Verfahren zur Laserbeschriftung von keramischen Materialien, Glasuren, keramischen Gläsern und Gläsern in an sich beliebiger Form, dadurch gekennzeichnet, dass man auf dem zu beschriftenden Material eine 100 bis 10'000 Å dicke transparente Titandioxidschicht aufbringt, dann diese Oxidschicht mit einem gepulsten Laser bestrahlt, wobei die Strahlung entsprechend der Form der aufzubringenden Markierung auf die Oxidschicht gerichtet wird, und dass man Laserlicht mit einer Wellenlänge verwendet, welches durch die Oxidschicht genügend absorbiert wird, so dass an den bestrahlten Stellen eine Verfärbung der Oxidschicht erzeugt wird.

Besonders geeignet ist das erfindungsgemässe Verfahren zur Beschriftung von Gläsern und keramischen Gläsern.

Gläser und keramische Gläser sind dem Fachmann wohlbekannt und beispielsweise in Ullmanns Enzyklopädie der technischen Chemie, 4. Auflage, Bd. 12, S. 317-366, beschrieben.

Unter keramischen Materialien versteht man anorganische, nichtmetallische hochschmelzende Materialien, die in der Literatur meistens als Tonkeramik und Sonderkeramik bezeichnet sind. Beispiele hierfür sind oxidische Verbindungen in kristalliner oder glasiger Form, z.B. Alkalimetall-Erdalkalimetall-Alumino-Silikate oder -Borate, ferner nicht oxidische Verbindungen, wie Carbide, Nitride und Silicide. Für weitere Beispiele wird auf die Ullmanns Enzyklopädie der techn. Chemie, 4. Auflage, Bd. 13, S.712-716 hingewiesen.

Glasuren sind auf einem keramischen Material aufgetragene glasartige Ueberzüge, deren Zusammensetzung derjenigen von Glas sehr ähnlich ist, und beispielsweise in obiger Ullmanns Enzyklopädie, 4. Auflage, Bd. 13, S. 722-724, beschrieben ist. Typische Beispiele hierfür sind Glasuren, die aus Quarz, Tonerde, Alkalimetalloxiden, Erdalkalimetalloxiden, und niedrig schmelzenden Oxiden (wie $Na_2O$, $K_2O$, $CaO$ und $BaO$) als Flussmittel bestehen.

Je nach Verwendungszweck können die erfindungsgemäss zu beschriftenden Materialien farblos, weiss oder mit einem geeigneten Pigment (auf welchem die grau-schwarze Beschichtung noch den genügenden Kontrast ergibt) eingefärbt, oder mit einer Schicht, die ein solches Pigment enthält (z.B. Glasfarbe oder farbige Glasur), überzogen sein.

2

Die Titandioxidschicht ist zweckmässig amorph, und ihre Dicke beträgt insbesondere 200 bis 5000 Å, ganz besonders aber 1000 bis 3000 Å.

Das Auftragen der Oxidschicht auf das zu beschriftende Material kann nach an und für sich bekannten Verfahren, wie z.B. Vakuum-Bedampfung, erfolgen. Eine der technisch gebräuchlichsten Methoden zum Aufbringen der erfindungsgemäss in Frage kommenden Oxidschicht ist die Behandlung des keramischen Materials mit einer Organotitanverbindung, z.B. bei hohen Temperaturen, so dass sich die eingesetzte titanorganische Verbindung durch Pyrolyse unter Bildung einer Oxidschicht auf dem zu beschriftenden keramischen Material zersetzt. Die Temperatur während der Pyrolyse muss so ausgewählt werden, dass sich das keramische Material (Substrat) nicht bzw. nicht wesentlich verändert, die titanorganische Verbindung sich aber zersetzt. Dabei kann die titanorganische Verbindung z.B. dampfförmig mit dem heissen Substrat in Kontakt gebracht oder auf das heisse Substrat aufgesprüht werden. Das Substrat kann auch kalt mit der titanorganischen Verbindung oder einer Lösung davon beschichtet und anschliessend nochmals gebrannt werden.

Geeignete titanorganische Verbindungen sind z.B. Titanacetylacetonate, wie Diisopropoxy-bis-(2,4-pentandionato)-titan (IV) oder Tetraalkyloxytitanate oder Gemische verschiedener Tetraalkyloxytitanate, wie z.B. in den US-Patenten Nr. 2 824 114 oder 3 051 593 beschrieben. Bevorzugt sind Tetraalkyloxytitanate mit 2 bis 4 C-Atomen pro Alkylgruppe, insbesondere aber Titanisopropylat, oder Titanate gemäss US 3 051 593.

Zusätzliche Informationen über derartige Verfahren (auch "Titanisieren von Glas" genannt) sind z.B. im US-Patent Nr. 3 051 593 und im Technischen Bulletin von TIL (Titanium Intermediates Limited), S. 13, beschrieben.

Eine weitere Herstellungsart für dünne Oxidschichten folgt dem Herstellungsprozedere für keramische Lüster (siehe z.B. Ullmans Enzyklopädie der techn. Chemie, 4. Auflage, Band 14, Seite 11). Danach wird eine titanorganische Verbindung (z.B. Titanisopropylat oder insbesondere Diisopropoxy-bis (2,4-pentandionato)-titan (IV) in einem organischen Anmachmittel, welches z.B. für Glasfarben, welche im Siebdruckverfahren appliziert werden, eingesetzt wird und im wesentlichen aus Harzen und Harzölen besteht, gelöst.

Die Flüssigkeit wird anschliessend (eventuell nach entsprechender Verdünnung) mit einem Filmziehgerät auf eine Glasplatte ausgezogen und dann eingebrannt, wobei das organische Anmachmittel vollständig verbrennt und die Titanverbindung zum Oxid pyrolisiert.

Es kann vorteilhaft sein, nur einen Teil des keramischen Materials mit der Oxidschicht zu überdecken, zweckmässigerweise nur die für die Beschriftung notwendige Fläche.

Zur Beschriftung der erfindungsgemäss in Frage kommenden anorganischen Materialien werden bevorzugt Laser, deren Wellenlängen im UV-Bereich liegen, insbesondere zwischen 190 und 360 nm, verwendet. Dabei wird die Laserstrahlung entsprechend der Form der aufzubringenden Schriftzeichen nahezu senkrecht auf die Oberfläche gerichtet, gegebenenfalls fokussiert, wobei an den bestrahlten Stellen eine Verfärbung entsteht.

Zweckmässig verwendet man Laser, welche die Möglichkeit haben, gepulstes Licht bzw. gepulste Strahlung zu erzeugen.

Beispiele für solche Laser-Quellen sind Festkörper-Pulslaser, wie frequenzvervielfachte Rubinlaser oder Nd:YAG-Laser, gepulste Laser mit Zusatzeinrichtung, wie gepulste Farbstofflaser oder Ramanshifter, weiter Dauerstrichlaser mit Pulsmodifikationen (Q-Switch, Mode-Locker), beispielsweise auf Basis von CW Nd:YAG-Lasern mit Frequenzvervielfacher, oder CW Ionen-Lasern (Ar, Kr), ferner gepulste Metalldampflaser (frequenzverdoppelt), wie beispielsweise Cu-Dampflaser oder Au-Dampflaser, oder gepulste Gaslaser, wie Excimer- und Stickstofflaser.

Je nach eingesetztem Laser-System sind Pulsenergien bis einige Joule, Leistungsdichten bis Terawatt pro cm², Pulsbreiten von Femto-Sekunden bis Micro-Sekunden und Repetitionsraten bis Gigahertz möglich. Vorteilhafterweise werden Pulsenergien von Microjoule bis Joule, Leistungsdichten von Kilowatt pro cm² bis 100 Megawatt pro cm², Pulsbreiten von Micro-Sekunden bis Pico-Sekunden und Repetitionsraten von Hertz bis 250 Megahertz eingesetzt.

Bevorzugt werden handelsübliche Laser mit gepulstem Licht wie beispielsweise in der nachstehenden Tabelle aufgeführt. Besonders bevorzugt sind gepulste oder pulsmodifizierte frequenzvervielfachte Nd:YAG-Laser oder Metall-Dampflaser, wie Au- oder insbesondere Cu-Dampflaser, oder Excimerlaser.

Tabelle

| Art/Vertreter | Kommerzielles Beispiel | Hauptwellenlänge (Nebenwellenlängen) [nm] |
|---|---|---|
| Festkörper-Pulslaser<br>• Rubinlaser<br><br>• Nd:YAG-Laser | Lasermetrics (938R6R4L-4)<br>Quanta Ray (DCR 2A) | 694 (347)<br><br>1064, (532, 355, 266) |
| Gepulste Laser mit Zusatzeinrichtung, wie<br>• Raman-Shifter<br>• Farbstofflaser | Quanta Ray (RS-1)<br>Lambda Physik FL 2002 | UV-IR<br>ca. 300-1000 |
| CW-Laser mit Puls-modifikation (frequenz-vervielfacht)<br>• Nd:YAG (Q-Switch, 2ω)<br><br>• Argon (mode-locked/ frequenzverdoppelt) | Lasermetrics (9560QTG)<br>Spectra-Physics, Mod. 2040 oder 2030 | 532 (355, 266)<br><br>514,5; 488 (257) (477, 497) |
| Gepulste Metalldampf-laser (frequenz-verdoppelt)<br>• Cu-Dampflaser<br><br>• Au-Dampflaser<br>• Mn-Dampflaser<br>• Pb-Dampflaser | Plasma-Kinetics 751<br><br>Plasma-Kinetics<br>} Oxford<br>} Laser CU 25 | 510, 578 (260, 289)<br>628 (314)<br>534, 1290 (267)<br>723 (362) |
| Gepulste Gaslaser<br>Excimer<br>• XeCl<br>• XeF }<br>sowie }<br>• N₂ } | Lambda Physik EMG-103 | 308<br>351<br><br>337 |

Gemäss dem erfindungsgemässen Verfahren wird beispielsweise mit einem gepulsten frequenzvervielfachten UV-Nd:YAG-Laser zwischen 0,01 und 1 Joule pro $cm^2$ Pulsenergiedichte, etwa 40 Megawatt Spitzenleistung, 6-8 Nano-Sekunden Pulsbreite und 20 Hertz Repetitionsrate (Modell Quanta Ray DCR-2 A der Firma Spectra Physics, Mountain View, California) gearbeitet.

Bevorzugt sind Pulsenergiedichten zwischen 0,1 und 0,5 Joule pro $cm^2$ und eine Pulsbreite von 5 bis 40 Nano-Sekunden.

Verwendet man einen Cu-Dampflaser (Plasma Kinetics Modell 151) mit Frequenzverdopplung, so wird beispielsweise mit 30 Nano-Sekunden Pulsbreite und 6 Kilohertz Repetitionsrate belichtet.

Laser mit guter Einstellbarkeit ihrer Laserparameter, wie beispielsweise Pulsenergie und Einwirkzeit, erlauben eine optimale Anpassung an die Bedürfnisse der zu beschriftenden Materialien.

Die optimale, zur Bestrahlung auszuwählende Wellenlänge ist diejenige, bei welcher die Oxidschicht am meisten, das zu beschriftende Substrat-Material dagegen weniger absorbiert.

Zur Beschriftung mit Lasern kommen im allgemeinen drei verschiedene Verfahren in Frage: das Maskenverfahren, die linienförmige Beschriftung und das Punkt-Matrix-Verfahren. Bei den zwei letztgenannten Beschriftungsarten (dynamische Strahlführung) wird der Laser bevorzugt in einem Laserbeschriftungssystem mit einem Strahlablenksystem gekoppelt, so dass das anorganische Material mit beliebigen, beispielsweise in einem Computer programmierten Ziffern, Buchstaben, Sonderzeichen, Dekoren, Markierungen, usw. an der Auftreffstelle des Laserstrahls beschriftet wird.

Die Wahl des Lasersystems bezüglich Leistung und Repetitionsrate richtet sich grundsätzlich nach dem zur Anwendung gelangenden Beschriftungsverfahren. Hohe Leistung und niedere Repetitionsrate, wie beim Festkörper-Pulslaser und Excimerlaser, werden bevorzugt für Maskenbelichtungen angewandt. Mittlere bis kleine Leistungen und schnelle Repetitionsraten, wie beim gepulsten Metalldampflaser oder beim Dauerstrichlaser mit Pulsmodifikationen, werden bevorzugt für Beschriftungen angewandt, die eine dynamische Strahlführung erfordern. Die Strahlablenkung kann beispielsweise akusto-optisch, holographisch, mit Galvo-Spiegeln oder Polygon-Scannern erfolgen. Die dynamische Strahlführung erlaubt eine äusserst flexible Beschriftung oder Markierung, da die Zeichen elektronisch erzeugt werden können.

Nach dem erfindungsgemässen Verfahren können die verschiedensten Beschriftungsarten erhalten werden. Beispiele hierfür sind: Variable Textprogrammierung von numerischen Zeichen mittels Texteingabe mit einem Bildschirmterminal, Textprogramme von Standardzeichen oder Sonderzeichen, wie Namenszüge, ferner Initialen und Widmungen, Signete oder sich oft wiederholende Daten, fortlaufende Stückzahlnumerierung, Eingabe von Messgrössen, Eingabe eines gespeicherten Programms, Linienbeschriftung oder auch Dekorieren von Glas- und Keramikartikeln (wie Gläser, Flaschen, Kacheln, Vasen).

Nach dem erfindungsgemässen Verfahren können die verschiedensten technischen Produkte bzw. Objekte, wie keramische Werkstücke und Träger, Gläser, keramische Gläser und Glasuren, beschriftet werden. Insbesondere lassen sich auch feine, (bruch)empfindliche Gegenstände schonend und berührungsfrei markieren.

Typische Anwendungsbeispiele von Beschriftung auf hellem Substrat sind keramische Träger und Gehäuse von Halbleiterschaltungen, keramische Leiterplatten (Dickschicht-, Dünnschicht-, Multilayer-PC-Boards), Bauteile der Elektronik, wie Isolatoren, mechanisch beanspruchte Hochtemperatur-Bauteile, wie im Motorenbau verwendete keramische Teile, ferner Werkzeuge für die spanabhebende Bearbeitung von Metallen, sowie Glühlampen. Das erfindungsgemässe Verfahren ist besonders vorteilhaft für häufig wechselnde Beschriftungsvorlagen, wie bei der Kennzeichnung von kundenspezifischen elektronischen Bauteilen, bei Kleinserien oder beim Anbringen von fortlaufenden Seriennummern.

Das erfindungsgemässe Verfahren ermöglicht eine direkte und rasche Markierung, welche nicht verwischt werden kann und daher abrieb- und kratzfest ist. Die erfindungsgemäss erhaltenen Markierungen sind ferner korrosions- und lösungsmittelbeständig, dimensionsstabil, deformationsfrei, licht-, hitze- und wetterbeständig, gut lesbar, und weisen einen guten Kontrast und sehr saubere Randzonen auf. Ferner werden die mechanischen, physikalischen und chemischen Eigenschaften des so beschrifteten Materials praktisch nicht beeinträchtigt, wie beispielsweise die mechanische Festigkeit und die chemische Resistenz.

Nach dem vorliegenden Verfahren können nicht nur visuelle Markierungen, sondern auch Markierungen oder digital codierte Informationen im Microbereich erzeugt werden. Im letztgenannten Falle können die Markierungen mit dem Fachmann bekannten, handelsüblichen Microlesern, z.B. mit einem Laser, gelesen werden.

Gemäss dem vorliegenden Verfahren tritt unter Laserbestrahlung an der bestrahlten Stelle des Materials ein Farbumschlag nach grau oder schwarz mit einem ausgeprägten Kontrast ein.

Ueberraschend beim erfindungsgemässen Verfahren ist, dass das erfindungsgemäss eingesetzte Titandioxid, welches sehr hohe Brenntemperaturen bis zu 1200°C erträgt und als gut lichtbeständig bekannt ist, bei intensiver Bestrahlung trotzdem eine Farbänderung (dunkle Verfärbung der transparenten Oxidbeschichtung) erfährt.

In den folgenden Beispielen bedeuten Teile, sofern nicht anders angegeben ist, Gewichtsteile.

Beispiele 1-4:

a) Herstellung der Muster: Glasplatten (Fensterglas) der Dimensionen 7,5 x 5 x 0,1 cm (Länge x Höhe x Dicke) werden auf ca. 500°C erhitzt, im heissen Zustand mit einer 10 %igen Lösung von Titanisopropylat in Isopropanol besprüht und dann nochmals auf ca. 500°C erhitzt.

b) Messung der Dicke der $TiO_2$-Schicht: Die Dicke der $TiO_2$-Schicht wird mittels Röntgenfluoreszenz bestimmt. Dabei wird die Oberflächenkonzentration in $\mu g/cm^2$ ermittelt, wobei der im unbeschichteten Glas vorhandene Ti-Gehalt in Abzug gebracht wird (ca. 3 $\mu g/cm^2$). Für die Berechnung der Schichtdicke wird eine Dichte des $TiO_2$ von 4 $g/cm^3$ angenommen.

c) <u>Beschriftung:</u> Maskenbeschriftung mit einem Excimerlaser (XeCl) der Wellenlänge 308 nm, 130 mJ Pulsenergie und Abbildung der Maske (Buchstabe "K", Höhe 10 mm und Länge 7 mm) mit einer Quarzlinse (Nenn-Brennweite 100 mm) im Abstand von 120 mm, entsprechend einem linearen Abbildungsverhältnis von 3 zu 1. Je 1 Laserpuls pro Ziffer.

Die Resultate sind in der folgenden Tabelle zusammengefasst:

| Bsp. Nr. | $\mu g/cm^2$ Ti | Dicke der $TiO_2$-Schicht (in Å) | Bestrahlung bei 308 nm mit | Resultat (Aspekt der Markierung) |
|---|---|---|---|---|
| 1 | 3,0 | 120 | 450 mJ/cm² | hellgrau |
| 2 | 16,7 | 650 | 450 mJ/cm² | hellgrau |
| 3 | 65,7 | 2570 | 450 mJ/cm² | schwarz-grau |
| 4 (Referenz; unbeschichtete Glasplatte) | - | - | 450 mJ/cm² | keine Markierung |

<u>Beispiele 5-8:</u>

a) <u>Herstellung der Muster</u>

Eine bestimmte Menge X einer 75%igen Lösung von Diisopropoxy-bis(2,4-pentandionato)-titan(IV) in Isopropanol [$TiO_2$-Gehalt: 16,5 %; Dichte 1 g/cm³] werden mit 1 ml eines Gemisches von 2 g Isopropanol und 8 g eines Anmachmediums für Glasfarben (Siebdrucköl Nr. 175, besteht im wesentlichen aus 80 % Pinienöl und 18 % ®Abalyn (Rosin); DRAKENFELD COLORS, Washington PA) gemischt. Diese Mischung wird mit einem Lackfilmziehgerät auf Glasplatten ausgezogen (Schichtdicke 100 μm), der erhaltene Lackfilm wird während 10 Minuten abgelüftet und während 10 Minuten bei 130°C in einem Umlufttrockenschrank getrocknet. Anschliessend werden die Platten in einem auf 620°C vorgeheizten Ofen während 1 Minute bei dieser Temperatur eingebrannt und dann langsam im geschlossenen Ofen abgekühlt, was sehr homogene Schichten ergibt.

Die Schichtdicke lässt sich einfach aus den eingesetzten Mengen obiger Titanverbindung und der Ausziehdicke berechnen, wobei die Dichten der Flüssigkeiten näherungsweise als 1 g/cm³, diejenige von Titandioxid als 4 g/cm³ angenommen werden.

| Beispiel Nr. | Menge X obiger Titanverbindung (in mg) | Dicke der $TiO_2$-Schicht (in Å) |
|---|---|---|
| 5 | 6 | 250 |
| 6 | 12,5 | 530 |
| 7 | 25 | 1040 |
| 8 | 75 | 2970 |

b) <u>Beschriftung</u>

<u>Mit einem Excimer-Laser:</u>

Der gepulste (ca. 20 Nanosekunden) Excimer-Laser Lambda Physik EMG 102 (Lambda Physik GmbH, Göttingen, BRD) wird bei einer Wellenlänge von 308 nm mit einer Pulsenergie von 150 mJ betrieben. Der Laserstrahl wird durch eine Metallmaske mit verschiedenen Buchstaben ("K"; "E"; Buchstabenhöhe 10 mm) und eine Quarzlinse (Brennweite 200 mm) auf die beschichtete Seite der Glasplatten abgebildet (Abbildungsverhältnis 2,5 zu1). Je 1 Laserpuls pro Ziffer/Buchstabe. Es entstehen verkleinerte, graue Buchstaben von hoher Abriebfestigkeit.

<u>Mit einem Nd:YAG-Laser:</u>

Der Ausgang des eingesetzten gepulsten (ca. 7 bis 10 Nanosekunden) Nd:YAG-Lasers (Quanta Ray DCR-2, Spectra Physics, Mountain View, USA) wird durch den Harmonic Generator und den Harmonic Separator auf 355 nm ungesetzt und durch eine Quarzlinse (Brennweite 200 mm) auf die beschichtete Seite der Glasplatten fokussiert (Abstand zur Linse = 185 mm). Bei einer Leistungseinstellung der Blitzlampen von 50 Joule (wobei nur der Oszillatorteil eingeschaltet ist) entstehen dunkelgraue Punkte, die durch bei der Vektorbeschriftung übliche Bewegung der Platte oder Ablenkung des Strahles zu beliebigen Beschriftungen geformt werden können.

An den beschrifteten Stellen tritt ein Farbumschlag nach grau bis schwarz ein, dessen Intensität mit der Schichtdicke zunimmt.

## Patentansprüche

1. Verfahren zur Laserbeschriftung von keramischen Materialien, Glasuren, keramischen Gläsern und Gläsern in an sich beliebiger Form, dadurch gekennzeichnet, dass man auf dem zu beschriftenden Material eine 10 bis 1000 nm (100 bis 10'000 Å) dicke transparente Titandioxidschicht aufbringt und dann diese Oxidschicht mit einem gepulsten Laser bestrahlt, wobei die Strahlung entsprechend der Form der aufzubringenden Markierung auf die Oxidschicht gerichtet wird, und dass man Laserlicht mit einer Wellenlänge verwendet, welches durch die Oxidschicht genügend absorbiert wird, so dass an den bestrahlten Stellen eine Verfärbung der Oxidschicht erzeugt wird.

2. Verfahren gemäss Anspruch 1, dadurch gekennzeichnet, dass man Glas und keramische Gläser beschriftet.

3. Verfahren gemäss Anspruch 1, dadurch gekennzeichnet, dass die Oxidschicht eine Dicke zwischen 20 und 500 nm (200 und 5000 Å) hat.

4. Verfahren gemäss Anspruch 1, dadurch gekennzeichnet, dass man die Oxidschicht durch Behandlung des keramischen Materials mit einer Organotitanverbindung aufbringt.

5. Verfahren gemäss Anspruch 4, dadurch gekennzeichnet, dass man als Organotitanverbindung ein Tetraalkyloxytitanat oder ein Titanacetylacetonat verwendet.

6. Verfahren gemäss Anspruch 5, dadurch gekennzeichnet, dass man ein Tetraalkyloxytitanat mit 2 bis 4 C-Atomen pro Alkylgruppe verwendet.

7. Verfahren gemäss Anspruch 6, worin man Titanisopropylat verwendet.

8. Verfahren gemäss Anspruch 5, dadurch gekennzeichnet, dass man Diisopropoxy-bis-(2,4-pentandionato)-titan (IV) verwendet.

9. Verfahren gemäss Anspruch 1, dadurch gekennzeichnet, dass man einen Laser, dessen Wellenlänge im UV-Bereich liegt, verwendet.

10. Verfahren gemäss Anspruch 9, dadurch gekennzeichnet, dass die Wellenlänge zwischen 190 und 360 nm liegt.

**11.** Verfahren gemäss Anspruch 1, dadurch gekennzeichnet, dass man einen gepulsten oder pulsmodifizierten frequenzvervielfachten Nd:YAG-Laser oder Metall-Dampflaser, oder einen Excimerlaser verwendet.

**12.** Verfahren gemäss Anspruch 1, dadurch gekennzeichnet, dass man mit einer Pulsenergiedichte zwischen 0,1 und 0,5 Joule pro cm$^2$ und einer Pulsbreite von 5 bis 40 Nano-Sekunden bestrahlt.

**13.** Verwendung einer transparenten Titandioxidschicht zur Laserbeschriftung von keramischen Materialien, Glasuren, keramischen Gläsern und Gläsern gemäss Anspruch 1.

## Claims

**1.** A method of laser marking ceramic materials, glazes, glass ceramics and glasses of any desired form, which comprises applying to the material to be marked a 10 to 1000 nm (100 to 10'000 Å) thick transparent layer of titanium dioxide, then irradiating said oxide layer with a pulsed laser such that the radiation is directed onto the oxide layer in accordance with the form of the marking to be applied, and using laser light of a wavelength which is sufficiently absorbed by the oxide layer so that a discolouration of the oxide layer is produced at the irradiated areas.

**2.** A method according to claim 1, which comprises marking glass and glass ceramics.

**3.** A method according to claim 1, wherein the oxide layer has a thickness of between 20 and 500 nm (200 and 5000 Å).

**4.** A method according to claim 1, wherein the oxide layer is applied by treating the ceramic material with an organotitanium compound.

**5.** A method according to claim 4, wherein the organotitanium compound is a tetraalkoxytitanate or a titanium acetylacetonate.

**6.** A method according to claim 5, which comprises the use of a tetraalkoxytitanate containing 2 to 4 carbon atoms per alkyl group.

**7.** A method according to claim 6, in which titanium isopropylate is used.

**8.** A method according to claim 5, which comprises the use of diisopropoxy-bis(2,4-pentanedionato)titanium(IV).

**9.** A method according to claim 1, which comprises the use of a laser whose wavelength is in the UV range.

**10.** A method according to claim 9, wherein the wavelength is between 190 and 360 nm.

**11.** A method according to claim 1, which comprises the use of a pulsed or pulse-modified, frequency-multiplied Nd:YAG laser or metal vapour laser, or an excimer laser.

**12.** A method according to claim 1, wherein irradiation is effected with a pulse energy of between 0.1 and 0.5 joule per cm$^2$ and a pulse duration of 5 to 40 nanoseconds.

**13.** Use of a transparent layer of titanium dioxide for laser marking ceramic materials, glazes, glass ceramics and glasses according to claim 1.

## Revendications

**1.** Procédé pour appliquer une inscription par laser sur des matériaux céramiques, des glaçures, des vitrocérames et des verres sous n'importe quelle forme connue en soi, caractérisé en ce qu'on dépose sur le matériau, sur lequel une inscription doit être apposée, une couche de bioxyde de titane transparente possédant une épaisseur de 10 à 1000 nm (100 à 10 000 Å), puis on irradie cette couche d'oxyde avec un laser pulsé, le rayonnement étant dirigé, en fonction de la forme du marquage à apposer, sur la couche d'oxyde, et on utilise une lumière laser possédant une longueur d'onde, qui est suffisamment absorbée par la couche d'oxyde de sorte qu'on obtient une coloration de la couche d'oxyde au niveau des emplacements irradiés.

2. Procédé selon la revendication 1, caractérisé en ce qu'on appose une inscription sur du verre et sur des vitrocérames.

3. Procédé selon la revendication 1, caractérisé en ce que la couche d'oxyde possède une épaisseur comprise entre 20 et 500 nm (200 et 5000 Å).

4. Procédé selon la revendication 1, caractérisé en ce qu'on dépose la couche d'oxyde en traitant le matériau céramique avec un composé organo-titane.

5. Procédé selon la revendication 4, caractérisé en ce qu'on utilise comme composé organo-titane, du tétraalkyloxytitanate ou un acétylacétonate de titane.

6. Procédé selon la revendication 5, caractérisé en ce qu'on utilise du tétraalkyloxytitanate comportant 2 à 4 atomes de C par groupe alkyle.

7. Procédé selon la revendication 6, selon lequel on utilise de l'isopropylate de titane.

8. Procédé selon la revendication 5, caractérisé en ce qu'on utilise du diisopropoxy-bis-(2,4-pentandionato)-titane (IV).

9. Procédé selon la revendication 1, caractérisé en ce qu'on utilise un laser, dont la longueur d'onde se situe dans la gamme des ultraviolets.

10. Procédé selon la revendication 9, caractérisé en ce que la longueur d'onde est comprise entre 190 et 260 nm.

11. Procédé selon la revendication 1, caractérisé en ce qu'on utilise un laser Nd:YAG ou un laser à vapeur métallique pulsé ou à impulsions modifiées et à multiplication de fréquence, ou un laser excimère.

12. Procédé selon la revendication 1, caractérisé en ce qu'on réalise l'irradiation avec une densité d'énergie impulsionnelle comprise entre 0,1 et 0,5 joule par $cm^2$ et une durée d'impulsion comprise entre 5 et 40 nanosecondes.

13. Utilisation d'une couche transparente de bioxyde de titane pour réaliser une inscription par laser sur des matériaux céramiques, des glaçures, des vitrocérames et des verres selon la revendication 1.